(19) **Europäisches Patentamt**
**European Patent Office**
**Office européen des brevets**

(11) **EP 3 013 893 B1**

(12) **FASCICULE DE BREVET EUROPEEN**

(45) Date de publication et mention
de la délivrance du brevet:
**25.02.2026 Bulletin 2026/09**

(21) Numéro de dépôt: **14745177.7**

(22) Date de dépôt: **24.06.2014**

(51) Classification Internationale des Brevets (IPC):
**C08K 3/26** *(2006.01)* **H01B 3/46** *(2006.01)*
**H01B 7/295** *(2006.01)* **C08L 83/04** *(2006.01)*

(52) Classification Coopérative des Brevets (CPC):
(C-Sets disponibles)
**C08K 3/26; C08K 5/14; C08K 5/56; C08L 83/00;**
**C08L 83/04; H01B 3/441; H01B 3/46; H01B 7/295;**
C08G 77/12; C08G 77/20; C08K 2003/265;
C08K 2003/267; Y02P 20/582 (Cont.)

(86) Numéro de dépôt international:
**PCT/FR2014/000141**

(87) Numéro de publication internationale:
**WO 2014/207323 (31.12.2014 Gazette 2014/53)**

(54) **COMPOSITIONS POLYORGANOSILOXANES VULCANISABLES A CHAUD UTILISABLES NOTAMMENT POUR LA FABRICATION DE FILS OU CABLES ELECTRIQUES**

HEISSVULKANISIERBARE POLYORGANOSILOXANZUSAMMENSETZUNGEN ZUR VERWENDUNG INSBESONDERE ZUR HERSTELLUNG VON ELEKTRISCHEN LEITUNGEN ODER KABELN

HOT-VULCANISABLE POLYORGANOSILOXANE COMPOSITIONS FOR USE IN PARTICULAR FOR THE PRODUCTION OF ELECTRICAL WIRES OR CABLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 FR 1301512**

(43) Date de publication de la demande:
**04.05.2016 Bulletin 2016/18**

(73) Titulaire: **ELKEM SILICONES France SAS**
**69190 Saint-Fons (FR)**

(72) Inventeurs:
• **GUICHARD Gérald**
**F-69700 Givors (FR)**
• **LOPEZ Amandine**
**F-69360 Saint Symphorien d'Ozon (FR)**
• **MARIOT David**
**F-69008 Lyon (FR)**

(74) Mandataire: **Garcia Escomel, Cristina**
**Elkem Silicones France SAS**
**9, rue Spécia**
**69190 Saint-Fons (FR)**

(56) Documents cités:
**JP-A- H0 245 567 US-A- 4 110 300**
**US-A- 5 057 367 US-A1- 2010 105 823**

• **DATABASE WPI Week 201247, Derwent World Patents Index; AN 2012-H47341, XP002721049**

Remarques:
Le dossier contient des informations techniques présentées postérieurement au dépôt de la demande et ne figurant pas dans le présent fascicule.

(52) Classification Coopérative des Brevets (CPC):
(Cont.)

C-Sets
**C08K 3/26, C08L 83/04;**
**C08K 5/14, C08L 83/04;**
**C08L 83/04, C08L 83/00, C08K 5/56, C08K 3/26**

**Description**

La présente invention concerne des compositions polyorganosiloxanes vulcanisables à chaud en élastomères silicones, c'est-à-dire vulcanisables à des températures de la matière généralement comprises entre 100° et 200°C et pouvant au besoin aller jusqu'à 250°C. L'invention concerne encore l'utilisation de ces compositions pour notamment la réalisation des enveloppes ou isolants primaires entrant dans la constitution de fils ou câbles électriques protégés contre l'incendie. L'invention concerne enfin les fils ou câbles électriques protégés contre l'incendie qui sont fabriqués moyennant l'utilisation de compositions identiques.

Par « fil électrique » on entend un composant électrotechnique servant au transport de l'électricité, afin de transmettre de l'énergie ou de l'information et qui est constitué d'un matériau conduisant l'électricité, monobrin ou multibrin, entouré d'une enveloppe isolante. L'intérieur d'un fil électrique est appelée « âme » du fil.

Par « conducteur » ou « mono conducteur » on entend un élément composé d'une âme et de son enveloppe isolante.

Par « câble électrique » on entend un composant électrotechnique servant au transport de l'électricité, afin de transmettre de l'énergie ou de l'information et qui est constitué de plusieurs conducteurs électriquement distincts et mécaniquement solidaires avec éventuellement un blindage extérieur.

Un câble électrique est constitué, d'un ou plusieurs mono conducteur(s) (en général à base de cuivre ou d'aluminium) ; chacun de ces mono conducteurs est protégé par une enveloppe ou isolant primaire fait d'une ou plusieurs couche(s) concentrique(s) à base d'un isolant. Autour de cette enveloppe ou de ces enveloppes (dans le cas d'un câble à plusieurs mono conducteurs) est (sont) prévu(s) un ou plusieurs élément(s) de remplissage et/ou un ou plusieurs élément(s) de renfort à base notamment de fibres de verre et/ou de fibres minérales. Ensuite une gaine extérieure pouvant comprendre une ou plusieurs gaine(s) est le plus souvent présente. Dans le cas d'un câble électrique à plusieurs mono conducteurs, le (ou les) élément(s) de remplissage et/ou le (ou les) élément(s) de renfort, qui est (sont) disposé(s) autour des mono conducteurs (équipés chacun de son isolant primaire), constitue(nt) une enveloppe commune à l'ensemble des mono conducteurs.

Par les expressions « fils ou câbles électriques protégés contre l'incendie » ou « fils ou câbles électriques de sécurité résistant au feu», on entend définir des fils ou câbles électriques qui doivent garantir un comportement au feu de haute qualité en termes, au moins, de cohésion des cendres et de résistance à la flamme. Les caractéristiques que doivent présenter les fils ou câbles électriques protégés contre l'incendie, font l'objet de réglementations légales dans de nombreux pays et des normalisations rigoureuses ont été établies.

La présente invention s'applique typiquement, mais non exclusivement, au domaine des « fils ou câbles électriques protégés contre l'incendie » c'est-à-dire résistant au feu et susceptibles de fonctionner pendant un laps de temps donné dans des conditions d'incendie, sans être pour autant propagateur d'incendie ni générateur de fumées importantes. Ces fils ou câbles électriques protégés contre l'incendie sont en particulier des fils ou câbles électriques de transport d'énergie ou de transmission basse fréquence. L'un des enjeux majeurs de l'industrie du câble est l'amélioration du comportement et des performances des câbles dans des conditions thermiques extrêmes, notamment celles rencontrées lors d'un incendie. En effet, lorsque les performances des matières constituant les gaines isolantes sont insuffisantes, la surchauffe des fils conducteurs compris dans un fil ou câble électrique conduit à la formation d'arcs électriques ou de courts circuits peuvent entraîner une inflammation et une combustion de celles-ci propageant ainsi le feu.

Ainsi pour des raisons de sécurité, il est en effet indispensable de maximiser les capacités du fil ou du câble électrique à retarder la propagation des flammes d'une part, et à résister au feu d'autre part afin d'assurer une continuité de fonctionnement notamment pour des dispositifs vitaux pour la sécurité des personnes tels qu'un système d'alarme, un ascenseur, un téléphone fixe, afin de permettre aux secours d'intervenir dans de meilleures conditions.

Un fil ou câble électrique de sécurité résistant au feu se doit en outre de ne pas être dangereux pour son environnement, c'est-à-dire de ne pas dégager de fumées toxiques et/ou opaques lorsqu'il est soumis à des conditions thermiques extrêmes.

Un fil ou câble électrique de sécurité résistant au feu requiert dans sa préparation des matériaux présentant une bonne cohésion du résidu après combustion au cours d'un incendie afin d'assurer une isolation suffisante du conducteur métallique évitant les coupures de courant. La résistance au feu demandée et les contraintes imposées sont résumées dans la norme Française NF C 32-070 CR1 qui concerne la durée de fonctionnement des câbles brûlant dans des conditions définies. La résistance au feu est à mettre sur le compte de la production de cendres qui doivent présenter une certaine cohésion permettant de conserver un isolement suffisant pour le fonctionnement des câbles. Cet essai consiste à soumettre une éprouvette de câble ou de fil à tester au flux thermique d'un four électrique chauffé à environ 900 °C, et à vérifier au cours du test son fonctionnement électrique. L'éprouvette est de plus mise en traction, et soumise à des chocs mécaniques. Un essai est jugé satisfaisant si des lampes témoins, branchées sur les câbles alimentés à une tension nominale, ne sont pas éteintes à la fin de la durée de l'essai.

La norme précitée ne peut être satisfaite que pour des fils ou câbles électriques dont au moins les matériaux isolants primaires ont été particulièrement étudiés vis-à-vis de leur non-propagation de l'incendie.

Pour assurer l'intégrité de l'isolant des fils ou câbles électrique souples pendant un incendie, l'industrie du câble a utilisé deux technologies: des rubans de mica résistants au feu ou des élastomères de silicone se transformant en céramique.

Robustes mais rigides les isolants à base de rubans en mica sont faciles à mettre en oeuvre à l'échelle industrielle, ils offrent une gaine isolante efficace et robuste lorsqu'ils sont recouverts de polyéthylène réticulé. L'inconvénient est que les câbles fabriqués selon cette technique sont rigides et bien plus difficiles à dénuder et à connecter.

L'isolant en élastomère de silicone constitue une alternative efficace face aux rubans mica. Son extrusion directe sur les conducteurs aboutit à un bon compromis entre tenue au feu et facilité de pose. De plus, contrairement aux matériaux préparés à partir de polymères organiques, les matériaux en silicone exposés à des températures élevées sous oxygène conduisent à la formation d'une substance cendreuse à base de silice qui présente l'avantage d'être isolante. Cette propriété intrinsèque aux matériaux en silicone a favorisé leurs utilisations dans le domaine des fils ou câbles électriques. En effet, après combustion c'est le résidu de silice qui maintient la fonction d'isolation du fil conducteur tout en retardant la volatilisation des produits de décomposition, réduisant la quantité de substances volatiles disponibles pour la combustion en phase gazeuse et donc, diminuant la quantité de chaleur disponible à la surface du fils ou câble électrique. Le résidu de silice permet également d'isoler la surface du fils conducteur du flux de chaleur incident. Cependant, cette couche de silice obtenue à partir d'un matériau en silicone ne présente pas une cohésion suffisante se désagrégeant au moindre choc. Ainsi, dans un fil ou câble électrique les seules propriétés d'une couche de protection en matériau silicone même chargé en silice, ne sont pas suffisantes pour pouvoir qualifier ce fil ou câble électrique dans la catégorie des fils ou câbles électriques de sécurité résistant au feu selon la norme Française NF C 32-070 CR1.

Pour palier à cet inconvénient, dans l'art antérieur, il a été décrit des compositions polyorganosiloxanes vulcanisables à chaud en élastomères silicones comprenant un polymère polyorganosiloxane réticulant par une catalyse au peroxyde, des charges de type fondant et/ou de type lamellaire qui peuvent être associées ou non à du platine et à des oxydes métalliques afin de donner naissance, dans le cas d'un incendie, à la formation d'une substance cendreuse isolante et ayant une certaine cohésion ce qui permet d'allonger le temps de fonctionnement des câbles dans un incendie. On citera le document EP-A-0 467 800 qui propose l'utilisation à la fois d'oxyde de zinc ou ZnO (à titre de fondant) et de mica (à titre de charge lamellaire), associée éventuellement à un composé du platine et/ou des oxydes métalliques comme par exemple l'oxyde de titane et l'oxyde de fer.

Une autre solution technique est décrite dans la demande de brevet WO 01/34696 dans laquelle des compositions polyorganosiloxanes vulcanisables à chaud en élastomères silicones, contiennent :

- 100 parties d'un ingrédient a) consistant dans au moins un polymère polyorganosiloxane,
- 5 à 80 parties d'au moins une charge de renforcement,

- 0,2 à 8 parties d'un peroxyde organique,

- 8 à 30 parties de mica,
- 6 à 20 parties d'oxyde de zinc,
- 0 à 15 parties d'au moins un additif habituellement utilisé dans le domaine des compositions polyorganosiloxanes vulcanisables à chaud,

lesdites compositions étant caractérisées en ce qu'elles contiennent en plus, à titre d'autres ingrédients obligatoires :

- 0,0010 à 0,02 partie de platine, un composé du platine et/ou un complexe du platine,
- 2 à 10 parties d'oxyde de titane, et
- 50 à 120 parties d'un ingrédient i) consistant dans au moins une charge de bourrage.

D'autres compositions utiles sont exposées dans la demande de brevet WO01/34705 qui décrit des compositions polyorganosiloxanes vulcanisables à chaud en élastomères silicones ayant un comportement au feu amélioré, contenant :

a) au moins un polymère polyorganosiloxane ;
b) au moins une charge de renforcement ;
c) un peroxyde organique ;
d) du mica ;
e) de l'oxyde de zinc ;
f) éventuellement au moins un additif habituellement utilisé dans le domaine des compositions polyorganosiloxanes vulcanisables à chaud ;

lesdites compositions étant caractérisées en ce qu'elles contiennent en plus, à titre d'autres ingrédients obligatoires :

> g) du platine, un composé du platine et/ou un complexe du platine ;
> h) de l'oxyde de titane ;
> i) au moins une charge de bourrage ; et
> j) au moins une espèce minérale appartenant au groupe de la wollastonite.

Enfin, la demande de brevet WO2004/064081 décrit l'utilisation de compositions polyorganosiloxanes vulcanisables à chaud en élastomères silicones contenant :

> a) au moins un polymère polyorganosiloxane ;
> b) au moins une charge de renforcement ;
> c) un peroxyde organique ;
> d) du mica ;
> e) de l'oxyde de zinc ;
> f) éventuellement au moins un additif habituellement utilisé dans le domaine des compositions polyorganosiloxanes vulcanisables à chaud ;
> g) du platine, un composé du platine et/ou un complexe du platine ;
> h) de l'oxyde de titane ; i) au moins une charge de bourrage ; et
> j) éventuellement au moins une espèce minérale appartenant au groupe de la wollastonite,

lesdites compositions étant caractérisées en ce que les charges de bourrage i) consistent dans des poudres d'hydroxyde d'aluminium Al(OH)$_3$ traitées en surface.

D'autres compositions polyorganosiloxanes vulcanisables à chaud en élastomères silicones sont décrites dans US 2010/0105823 A1.

Ainsi, les fils ou câbles électriques de l'art antérieur qui bénéficient de l'appellation « sécurité » impose l'utilisation de câbles dont les matériaux isolants primaires ont été particulièrement étudiés vis-à-vis de leur non-propagation de l'incendie. Les matériaux primaires isolants à base d'élastomères silicones sont le plus souvent obtenus à partir d'une composition polyorganosiloxane réticulant soit à température élevée sous l'action de peroxydes organiques, soit réticulant à température ambiante ou à la chaleur par des réactions de polyaddition en présence d'un catalyseur métallique.

Un mélange prêt à l'emploi est une composition de polyorganosiloxanes vulcanisable à chaud (EVC) précurseur du matériau isolant en silicone. Une composition d'EVC comprend généralement dans des proportions qui dépendent des propriétés finales recherchée :

> - des huiles et/ou des gommes polyorganosiloxanes avec des fonctions siloxyles ayant des groupes vinylées, de préférence en bout de chaîne,
> - des charges de renfort, en particulier des silices de combustion;
> - éventuellement un plastifiant ou un agent anti structure (qui ralentit l'évolution de viscosité au stockage) ;
> - un composant de durcissement en quantité suffisante pour durcir la composition soit à température ambiante soit sous l'action de la chaleur, et
> - un système stabilisant thermique.

Ces mélanges sont livrés sous la forme d'un ou plusieurs composants et peuvent être formulés directement par l'utilisateur selon les propriétés spécifiques recherchées. Après plastification par malaxage, ces mélanges prêts à l'emploi EVC sont mis en œuvre par extrusion, pour le câblage de fils ou de conducteurs métalliques. En effet, dans la réalisation d'une enveloppe ou d'un isolant primaire d'un mono conducteur, le mélange prêt à l'emploi EVC est ensuite déposé autour de chaque mono conducteur, puis réticulé en élastomère silicone par un chauffage procurant une température matière allant de 100°C à 250°C. Le matériau silicone obtenu est alors qualifié de « recuit ». Les épaisseurs des isolants en matériaux silicones sont faibles (pas plus de quelques mm d'épaisseur pour certains câbles). Cependant, les propriétés de résistance à la flamme sont toujours recherchées et sont évaluées notamment selon la norme IEC60707 et plus précisément par la norme UL 94V qui est la norme appliquée par les « Laboratoires American Underwriters » pour tester l'inflammabilité et la sécurité au feu de l'isolant en matériau silicone. On caractérise une autoextinguibilité en mesurant le temps durant lequel une éprouvette reste enflammée après deux applications successives d'une flamme de bec bunsen. Plus l'épaisseur de l'échantillon testé est faible plus le test est exigent pour le matériau testé.

Toutefois, de pareils mélanges prêt à l'emploi EVC ou compositions polyorganosiloxanes vulcanisables à chaud en élastomères silicones proposées jusqu'ici ne sont pas totalement satisfaisantes. En effet, ces compositions ont le désavantage de présenter des propriétés de collant compliquant ainsi leur manipulation (ou « leur processabilité ») lors d'une préparation industrielle ou de leurs mise en œuvre par extrusion dans le cadre de la fabrication de fils ou câbles électriques.

Un autre problème rencontré par ces compositions est lié aux exigences imposées pour atteindre un niveau de performance satisfaisant la norme Française NF C 32-070 CR1. En effet, l'art antérieur enseigne qu'il est nécessaire que les compositions d'EVC contiennent une quantité importante de particules minérales afin que le résidu après dégradation du matériau conserve une intégrité suffisante pour continuer à assurer le bon fonctionnement électrique. Pour avoir une réelle influence les taux de charges inorganiques introduits dans un mélange prêt à l'emploi EVC sont le plus souvent introduits dans des quantités supérieures à 50% en poids par rapport au poids total du mélange. Ceci à pour conséquence que la viscosité ou la consistance de ces mélanges prêt à l'emploi EVC élevées ce qui imposent des contraintes élevées au niveau des outils industriels notamment lors de l'étape d'extrusion. La facilité de mise en œuvre ou « processabilité » est donc un critère important surtout dans le cadre d'un procédé industriel. En effet, lorsqu'ils sont mis en œuvre dans la fabrication d'un conducteur (constitué d'une âme et d'une enveloppe isolante), les mélanges prêt à l'emploi EVC sont tout d'abord malaxés de manière à « plastifier la pâte », puis ils sont extrudés de manière à disposer le matériau isolant autour de l'âme conductrice et réticulés par chauffage de manière à permettra le durcissement final du matériau isolant.

Un autre problème lié à ces forts taux de charges présentes dans la matrice du matériau en silicone est une augmentation de la densité du matériau obtenu et ainsi du poids des fils et câbles électriques de sécurité. Ceci va à l'encontre de la demande des utilisateurs qui sont à la recherche de fils ou câbles électriques de sécurité de plus en plus légers. De plus, les propriétés mécaniques, et notamment l'allongement à la rupture, de ces matériaux en silicone fortement chargés sont altérées.

Un autre additif important pour améliorer le comportement au feu d'un matériau en silicone est le platine (Pt) ou des dérivés du platine. En effet, l'ajout de platine, de préférence en présence de silice, permet d'améliorer la stabilité thermique et le comportement au feu du matériau en silicone. Il est à présent connu que la présence de platine et de silice dans un matériau en silicone permet d'augmenter le taux de résidu du silicone après combustion.

Bien qu'en valeur absolue une faible quantité de platine soit nécessaire, pour pouvoir répondre aux conditions extrêmes selon la norme Française NF C 32-070 CR1 et selon l'art antérieur il est important d'ajouter :

- 56 ppm de platine métal et plus de 50% en poids de charges minérales dans la composition décrite de l'exemple de la demande de brevet EP 1 238 007,
- 25 ppm de platine métal et plus de 50% en poids de charges minérales dans la composition décrite de l'exemple de la demande de brevet EP 2 004 741, ou
- 10 ppm de platine métal et plus de 50% en poids de charges minérales dans la composition décrite de l'exemple de la demande de brevet EP 2 099 848.

Le coût très élevé du platine incite l'industrie des câbles de sécurité à trouver des alternatives techniques nécessitant moins de platine dans les matériaux silicones utilisés pour l'isolation des câbles et fils électriques de sécurité sans détériorer les propriétés de résistance thermique du matériau en silicone et tout en étant conforme à la norme.

C'est ainsi que les mélanges prêt à l'emploi EVC ou les compositions de polyorganosiloxanes vulcanisables à chaud (EVC) précurseurs d'un matériau isolant en silicone pour les fils et câbles électriques de sécurité proposé(e)s jusqu'ici ne sont pas totalement satisfaisants et nécessitent encore des améliorations pour notamment :

a) obtenir des cendres plus cohésives, ce qui conduira en cas d'incendie à des temps plus longs de fonctionnement des câbles,

b) diminuer la densité du matériau isolant en silicone obtenu à partir des mélanges prêt à l'emploi EVC de manière à alléger le poids des fils et câbles électrique de sécurité, de préférence à une densité inférieure à 1,3,

c) faire en sorte que la viscosité du mélange prêt à l'emploi EVC soit suffisamment basse afin qu'il soit facilement manipulable et permettre une bonne processabilité avec les outils mis en œuvre dans la fabrication des fils et câbles électrique de sécurité,

d) diminuer le taux de platine utilisé pour améliorer la stabilité thermique à des valeurs inférieures à 10 ppm voir inférieures à 5 ppm, et

e) obtenir de bonnes performances d'autoextinguibilité ou de résistance à la flamme des élastomères obtenus à partir des mélanges prêt à l'emploi selon le protocole défini par la référence "The Underwritors Laboratories" (UL 94V), quatrième édition du 18 juin 1991.

Un but de la présente invention est donc la mise au point de compositions polyorganosiloxanes vulcanisables à chaud en élastomères silicones qui soient capables, déjà quand elles sont utilisées pour la seule réalisation de l'isolant primaire, de conférer aux fils et câbles électriques un comportement au feu de très haute qualité marqué, au moins, par la réalisation d'une bonne cohésion des cendres permettant de satisfaire à la norme "NF C 32-070 CR1" et d'apporter des améliorations quand aux propriétés recherchées et énumérées aux points b) à e) ci-dessus.

Il a maintenant été trouvé, et c'est ce qui constitue le premier objet de la présente invention une composition C comprenant :

(A) pour 100 parties en poids d'au moins un polymère polyorganosiloxane A présentant par molécule au moins deux groupes alcényles, en $C_2$-$C_6$ liés au silicium,
(B) entre 1 et 30 parties en poids d'au moins un minéral B qui est constitué par un mélange d'hydromagnésite de formule brute $Mg_5(CO_3)_4(OH)_2.4H_2O$, et d'huntite de formule brute $Mg_3Ca(CO_3)_4$,
(C) de 0,1 ppm à 200 ppm, exprimée en poids de platine métal élémentaire par rapport au poids total de la composition C, d'au moins un stabilisant thermique D permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges, et
(D) un composant de durcissement E en quantité suffisante pour durcir la composition.

La composition C de polyorganosiloxane(s) qui est durcissable en un élastomère silicone est particulièrement utile comme isolant dans un fil ou câble électrique.

Ainsi la Demanderesse a découvert que l'utilisation d'au moins un minéral B constitué par un mélange d'hydomagnésite de formule brute $Mg_5(CO_3)_4(OH)_2,4H_2O$, et d'huntite de formule brute $Mg_3Ca(CO_3)_4$ dans la composition selon l'invention conduit à un bon compromis dans l'application fils ou câbles électriques et permet :

- d'obtenir des cendres plus cohésives, ce qui conduira en cas d'incendie à des temps plus longs de fonctionnement des câbles,
- une bonne extrudabilité et une facilité de mise en œuvre (ou « processabilité ») améliorée de la composition par rapport aux compositions de l'art antérieur et ne présente plus les propriétés de collants néfastes de l'art antérieur, permettant ainsi une manipulation plus aisée, ce qui est un avantage important pour une mise en œuvre industrielle,
- de diminuer la densité du matériau isolant en silicone obtenu à partir des mélanges prêt à l'emploi EVC de manière à alléger le poids des fils et câbles électrique de sécurité et d'atteindre des densités faibles inférieures à 1,3,
- de diminuer le taux de platine utilisé pour améliorer la stabilité thermique à des valeurs inférieures à 10 ppm voir inférieures à 5 ppm, et
- d'obtenir de bonnes performances d'autoextinguibilité ou de résistance à la flamme des élastomères obtenus à partir des mélanges prêt à l'emploi selon le protocole défini par la référence "The Underwritors Laboratories" (UL 94V), quatrième édition du 18 juin 1991.

L'hydromagnésite de formule brute $Mg_5(CO_3)_4(OH)_2.4H_2O$ est un minéral de structure lamellaire dont les dimensions de la particule primaire sont de l'ordre de 2 à 5 $\mu$m de diagonale D et par exemple de 200 nm d'épaisseur d et de facteur de forme 1:20.

L'huntite de formule brute $Mg_3Ca(CO_3)_4$ est un minéral de structure lamellaire dont les dimensions de la particule primaire sont de l'ordre de 1 à 2 $\mu$m de diagonale D, par exemple de 50 nm d'épaisseur d et de facteur de forme 1:20.

La dureté Mohs de l'hydromagnésite et de l'huntite est de l'ordre de 1 à 2 et le rapport d'aspect est par exemple supérieur ou égal à 1:20. L'hydromagnésite et l'huntite se présentent généralement sous forme d'agrégats de particules primaires lamellaires de taille comprise généralement entre 1 et 15 $\mu$m avec une épaisseur comprise entre 100 et 500 nm.

Le stabilisant thermique D contient du platine qui peut être sous forme: de platine métallique (élémentaire), d'acide chloroplatinique (par exemple l'acide hexachloroplatinique $H_2PtCl_6$), d'acide chloroplatinique hydraté $H_2PtCl_6$, 6$H_2O$ (tel que décrit dans le brevet US-A-2 823 218), sous forme de complexes du platine et de produits organiques : comme notamment les complexes du platine et d'organosiloxanes vinylés (par exemple le complexe de Karstedt cf. US-A-3 775 452), les complexes tels que ceux de formule $(PtCl_2, \text{oléfine})_2$ et $H(PtCl_3, \text{oléfine})$ décrits dans le brevet US-A-3 159 601 où l'oléfine représente l'éthylène, le propylène, le butylène, le cyclohexène ou le styrène, les complexes de chlorure de platine et de cyclopropane décrit dans le brevet américain US-A-3 159 662 ou des complexes de type Pt-carbène tels que ceux décrits dans la demande de brevet EP1866364-A1.

Un autre avantage de la composition selon l'invention est que la quantité de platine utilisée comme stabilisant thermique **D** peut être réduite à des quantités inférieures à 10 ppm, 9 ppm ou 5 ppm par rapport au poids total de la composition.

Ainsi selon un mode de réalisation avantageux, la composition **C** est caractérisée en ce qu'elle comprend de 0,00001 à 0,0009 partie, soit de 0,1 ppm à 9 ppm, exprimée en poids de platine métal élémentaire par rapport au poids total de la composition **C** et d'au moins un stabilisant thermique **D** permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges.

Selon un mode de réalisation préféré, l'invention concerne donc une composition **C** comprenant :

(A) pour 100 parties en poids d'au moins un polymère polyorganosiloxanes **A** présentant par molécule au moins deux groupes alcényles, en $C_2$-$C_6$ liés au silicium,

(B) entre 1 et 30 parties en poids d'au moins un minéral **B** qui est constitué par un mélange d'hydromagnésite de formule brute $Mg_5(CO_3)_4(OH)_2.4H_2O$, et d'huntite de formule brute $Mg_3Ca(CO_3)_4$,

(C) de 0,1 ppm à 200 ppm, exprimé en poids de platine métal élémentaire par rapport au poids total de la composition **C,** d'au moins un stabilisant thermique **D** permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges,

(D) un composant de durcissement **E** en quantité suffisante pour durcir la composition,

(E) de 0 à 200 parties en poids, de préférence de 0,5 à 120 parties en poids et encore plus préférentiellement de 0,5 à 50 parties en poids d'au moins une charge fusible **F** ayant un un point de de ramollissement compris entre 300°C et 900°C,

(F) de 0 à 250 parties en poids et de préférence de 0,1 à 100 parties poids et encore plus préférentiellement de 0,5 à 50 parties en poids d'au moins une charge minérale réfractaire **G,**

(G) de 0 à 300 parties en poids, de préférence de 1 à 100 parties en poids et encore plus préférentiellement de 1 à 80 parties en poids d'au moins une charge minérale ignifugeante **H** choisie parmi le groupe constitué par : l'hydroxyde de magnésium $Mg(OH)_2$, l'hydroxyde d'aluminium $Al(OH)_3$ qui a éventuellement été traitée en surface, par un organoakoxysilane ou un organosilazane, et leurs mélanges, et

(H) de 0 à 20 parties en poids, de préférence de 0,1 à 15 parties en poids et encore plus préférentiellement de 0,5 à 10 parties en poids d'un oxyde de zinc.

Le polymère polyorganosiloxane **A** peut être linéaire ou ramifié. A titre illustratif, le polymère polyorganosiloxane **A** peut être constitué :

- de motifs siloxyles de formule générale **(1')** : $R_nSiO_{(4-n)/2}$
- et d'au moins deux motifs siloxyles de formule générale **(II')**: $Z_xR_ySiO_{(4-x-y)/2}$

  ○ formules dans lesquelles les divers symboles ont la signification suivante :

  - les symboles R, identiques ou différents, représentent chacun un groupement de nature hydrocarbonée non hydrolysable, ce radical pouvant être :

    - un radical alkyle ayant de 1 à 5 atomes de carbone ou halogénoalkyle ayant de 1 à 5 atomes de carbone et comportant de 1 à 6 atomes de chlore et/ou de fluor,
    - un radical cycloalkyle et halogénocycloalkyles ayant de 3 à 8 atomes de carbone et contenant de 1 à 4 atomes de chlore et/ou de fluor,
    - un radical aryle, alkylaryle ou halogénoaryle ayant de 6 à 8 atomes de carbone et contenant de 1 à 4 atomes de chlore et/ou de fluor, ou
    - un radical cyanoalkyle ayant de 3 à 4 atomes de carbone;

  ○ les symboles Z, identiques ou différents, représentent chacun un groupe alcényle en $C_2$ à $C_6$ ;
  ○ n = un nombre entier égal à 0, 1, 2 ou 3 ;
  ○ x = un nombre entier égal à 1, 2 ou 3 et de préférence égal à 1,
  ○ y = un nombre entier égal à 0, 1, ou 2 ; et
  ○ la somme x + y =1, 2 ou 3.

A titre illustratif, on peut citer parmi les radicaux organiques R, directement liés aux atomes de silicium les radicaux suivants: méthyle ; éthyle ; propyle ; isopropyle ; butyle ; isobutyle ; n-pentyle ; t-butyle ; chlorométhyle ; dichlorométhyle ; $\alpha$-chloroéthyle; $\alpha,\beta$-dichloroéthyle ; fluorométhyle ; difluorométhyle ; $\alpha,\beta$-difluoroéthyle ; trifluoro-3,3,3 propyle ; trifluoro cyclopropyle ; trifluoro-4,4,4 butyle ; hexafluoro-3,3,4,4,5,5 pentyle; $\beta$-cyanoéthyle ; $\gamma$-cyanopropyle ; phényle : p-chlorophényle ; m-chlorophényle ; dichloro-3,5 phényle ; trichlorophényle ; tétrachlorophényle ; o-, p- ou m-tolyle ; $\alpha,\alpha,\alpha$-trifluorotolyte ; xylyles comme diméthyl-2,3 phényle et diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z sont des alcényles qui sont de préférence des groupes vinyles ou allyles.

A titre d'exemples concrets de motifs de formules siloxyle **(I')** peuvent être cités ceux de formules: $(CH_3)_2SiO_{2/2}$, $(CH_3)(C_6H_5)SiO_{2/2}$, $(C_6H_5)_2SiO_{2/2}$, $(CH_3)(C_2H_5)SiO_{2/2}$, $(CH_3CH_2CH_2-)(CH_3)SiO_{2/2}$, $(CH_3)_3SiO_{1/2}$ et $(CH_3)(C_6H_5)_2SiO_{1/2}$.

A titre d'exemples concrets de motifs de formules siloxyle **(II')** peuvent être cités ceux de formules: $(CH_3)(C_6H_5)$ $(CH_2=CH)SiO_{1/2}$, $(CH_3)(CH_2=CH) SiO_{2/2}$ et $(CH_3)_2(CH_2=CH)SiO_{1/2}$.

A titre d'exemple, le polymère polyorganosiloxane **A** peut contenir de 0,01 à 4 % en poids de groupement vinylé. Lorsque ces polymères polyorganosiloxanes **A** ont des viscosités à 25°C comprises entre 1 000 et 1 000 000 mPa.s, ils sont désignés par le terme « huiles », mais leur viscosité peut aussi être supérieure à 1 000 000 mPa.s et elles sont alors désignées par le terme « gommes ». Dans les compositions selon la présente invention, les polymères polyorganosiloxanes peuvent être des huiles ou des gommes ou des mélanges. Ces huiles et gommes sont commercialisées par les fabricants de silicone ou peuvent être fabriquées en opérant selon des techniques déjà connues.

Selon un mode de réalisation préféré, le polymère organosiloxane **A** présente par molécule au moins 2 groupes vinyles liés à des atomes de silicium différents, situés dans la chaîne, en bouts de chaîne ou dans la chaîne et en bouts de chaîne, et dont les autres radicaux organiques liés aux atomes de silicium sont choisis parmi le groupe constitué par les radicaux: méthyle, éthyle et phényle.

Le stabilisant thermique **D** permettant d'améliorer la résistance contre la dégradation des élastomères silicones sous l'effet de températures supérieures à 800°C est choisi parmi le groupe constitué par: le platine métal, un composé du platine, un complexe du platine et leurs mélanges. Le platine peut être sous forme :

- de platine métallique (élémentaire),
- d'acide chloroplatinique (par exemple l'acide hexachloroplatinique $H_2PtCl_6$),
- de complexes du platine et de produits organiques comme notamment les complexes du platine et d'organosiloxanes vinylés (par exemple le complexe de Karstedt), les complexes tels que ceux de formule ($PtCl_2$, oléfine)$_2$ et H($PtCl_3$, oléfine) où l'oléfine représente l'éthylène, le propylène, le butylène, le cyclohexène ou le styrène, les complexes de chlorure de platine et de cyclopropane ou les complexes de type platine carbène (tels que ceux décrits par exemple dans la demande de brevet EP1235836-A2).

La charge fusible **F** a typiquement un point de de ramollissement compris entre 300°C et 900°C. Elle peut être choisie parmi les oxydes de bores (e.g. $B_2O_3$), les borates de zinc anhydres (e.g. 2ZnO $3B_2O_3$) ou hydratés (e.g. 4ZnO $B_2O_3$ $H_2O$ ou 2ZnO $3B_2O_3$ $3,5H_2O$), et les phosphates de bore anhydres (e.g. $BPO_4$) ou hydratés, ou un de leurs précurseurs qui peut être l'oxyde de bore ou un borosilicate de calcium, un verre recyclé et broyé à base d'aluminosilicate tel que la Fillite® 160W commercialisé par la société Omya, des microsphères de verre creuses ou pleines telles que ceux de la gamme Sphériglass® (en particulier Sphériglass® 7010 CP01, Sphériglass® 5000 CP01, Sphériglass® 2000 CP01 et Sphériglass® 3000 CP01) commercialisées par la société Potters Industries, les feldspaths tels que les produits de la gamme Microspar® tels que Microspar® 1351 600, Microspar® 1351 600MST vendus par la société Quarzwerke, les borates de calcium hydratés, ou un mélange de ces charges.

L'utilisation comme charge fusible F de microsphères de verres pleines de type Sphériglass® 7010 CP01 ou Sphériglass® 5000 CP01 commercialisées par la société Potters Industries est particulièrement préférée.

Selon un mode de réalisation préféré, la charge fusible **F** est choisie parmi le groupe constitué par: l'oxyde de bore, les borates de zinc, les phosphates de bore, les verres broyés, les verres sous forme de billes, les borates de calcium et leurs mélanges.

La charge minérale réfractaire **G** peut être au moins une charge minérale choisie parmi les oxydes de magnésium (e.g. MgO), les oxydes de calcium (e.g. CaO), les oxydes de silicium (e.g. une silice $SiO_2$ de précipitation ou de pyrogénation qui est de préférence traitée en surface pour la rendre hydrophobe par les technique connues dans le domaine des silicones ou un quartz), les oxydes d'aluminium ou alumines (e.g. $Al_2O_3$), les oxydes de chrome (e.g. $Cr_2O_3$), les oxydes de titane, les oxydes de fer, les oxydes de zirconium (e.g. $ZrO_2$), les nano-argiles incluant les 3 sous-familles des phyllosilicates, des polysilicates et des hydroxydes doubles lamellaires (les montmorillonites, les sépiolites, les illites, les attapulgites, les talcs, les kaolins, les micas) et leurs mélanges.

Selon un mode de réalisation préféré, la charge réfractaire **G** est choisie parmi le groupe constitué par: les oxydes de magnésium, les oxydes de calcium, la silice, le quartz, les montmorillonites, les talcs, les kaolins, les micas et leurs mélanges.

Une combinaison de charges réfractaires **G** est particulièrement préférée et consiste en une association :

- d'au moins une charge réfractaire **G1** choisie parmi le groupe constitué par un oxyde de silicium (e.g. une silice $SiO_2$ de précipitation ou de pyrogénation qui est de préférence traitée en surface pour la rendre hydrophobe par les technique connues dans le domaine des silicones), un quartz, des phyllosilicates tels que par exemple les montmorillonites, les sépiolites, les illites, les attapulgites, les talcs, les kaolins ou les micas (e.g. mica muscovite 6 $SiO_2$ - 3 $Al_2O_5$ - $K_2O$ - $2H_2O$) et leurs mélanges, et
- d'au moins une charge réfractaire **G2** choisie parmi le groupe constitué par : les oxydes de magnésium (e.g. MgO), les oxydes de calcium (e.g. CaO), les oxydes d'aluminium ou alumines (e.g. $Al_2O_3$), les oxydes de chrome (e.g. $Cr_2O_3$), les oxydes de zirconium (e.g. $ZrO_2$) et leurs mélanges.

Lorsqu'une telle combinaison de charges réfractaire **G** est mise en œuvre les charges réfractaires **G1** sont de préférence présentes à raison de 10 à 150 parties en poids pour 100 parties en poids de polymère polyorganosiloxanes **A** et les charges réfractaires **G2** sont de préférence présentes à raison de 0,5 à 100 parties en poids pour 100 parties en poids de polymère polyorganosiloxane **A** :

Les oxydes de silicium tels que la silice présentent l'avantage d'être largement utilisés dans le domaine des silicones comme charges renforçantes. Ils sont généralement choisis parmi les silices de combustion et les silices de précipitation. Elles ont une surface spécifique, mesurée selon les méthodes BET, d'au moins 20 $m^2$/g, de préférence supérieure à 100 $m^2$/g, et une dimension moyenne des particules inférieure à 0,1 micromètre ($\mu m$). Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 10 % environ.

La charge minérale ignifugeante **H** est choisie parmi le groupe constitué par : l'hydroxyde de magnésium $Mg(OH)_2$, l'hydroxyde d'aluminium $Al(OH)_3$ qui a éventuellement été traitée en surface par un organoakoxysilane ou un organosilazane et leurs mélanges. Pareille charge présente souvent une taille de particules supérieure à 0,1 $\mu m$.

A titre d'exemples concrets d'organoalkoxysilanes, on peut citer : le méthyltriméthoxysilane, le méthyltriéthoxysilane, le phenyltriméthoxysilane, réthyltriméthoxysilane, le n-propyltriméthoxysilane, le vinyltriméthoxysilane, le vinyltri(2-méthoxyéthoxy)silane, le vinyltriacétoxysilane, l'allyltriméthoxysilane, le butènyltriméthoxysilane, l'hexènyltriméthoxysilane, le gamma-méthacryloxyproyltriméthoxysilane, le diméthyldiméthoxysilane, le diméthyldiéthoxysilane, le diphenyldiméthoxysilane, le trimethylméthoxysilane, le triméthyléthoxysilane.

A titre d'exemples concrets d'organosilazane, on peut citer : l'hexamétyldisilazane ou le divinyltétraméthyldisilazane.

De préférence, la charge minérale ignifugeante H est le trihydroxyde d'aluminium traité avec un organoalkoxysilane.

Les compositions selon la présente invention peuvent aussi contenir encore, à titre d'ingrédient optionnel, au moins une espèce minérale **I** appartenant au groupe de la wollastonite. Le groupe de la wollastonite comprend les espèces minérales suivantes : le métasilicate de calcium ($CaSiO_3$) ou wollastonite ; le métasilicate mixte de calcium et de sodium ($NaCa_2HSi_3O_9$) ou pectolite ; et le métasilicate mixte de calcium et de manganèse $[CaMn(SiO_3)_2]$ ou bustamite. Bien entendu on peut utiliser un mélange de ces différentes espèces. De préférence, l'espèce minérale **I** est une wollastonite. La wollastonite existe sous deux formes: la wollastonite elle-même, que les chimistes désignent par $\alpha$-$CaSiO_3$, que l'on trouve couramment à l'état naturel ; et la pseudo-wollastonite ou $\beta$-$CaSiO_3$. De manière plus préférentielle, on utilise la wollastonite $\alpha$-$CaSiO_3$, L'espèce minérale I appartenant au groupe de la wollastonite peut être non traitée en surface ou traitée par un composé organosilicique du type de ceux mentionnés ci-avant à propos de la poudre d'hydroxyde d'aluminium.

L'espèce minérale I peut-être présente à raison de 2 à 20 parties en poids pour 100 parties en poids de polyorganosiloxane **A.**

Selon un mode de réalisation préféré, la composition **C** est caractérisée en ce que le composant de durcissement **E** est :

- au moins un peroxyde organique **(a-1),** ou
- un composant **(a-2)** constitué :

    a) d'au moins un polyorganosiloxane **(II)** présentant, par molécule, au moins deux atomes d'hydrogène liés au silicium, et de préférence au moins trois atomes d'hydrogène liés au silicium, et
    b) une quantité efficace d'au moins un catalyseur de polyaddition **(III)** et de préférence choisi parmi le groupe constitué par du platine, un composé du platine, un complexe du platine et leurs mélanges.

Lorsque le composant de durcissement E est un peroxyde organique **(a-1),** la compositions C est durcissable à température élevée (généralement entre 100 et 200°C) sous l'action de peroxydes organiques. Le polyorganosiloxane ou gomme entrant dans de telles compositions appelées EVC est alors constitué essentiellement de motifs siloxyles (V), éventuellement associés à des motifs (VI) dans lesquels le reste **Z** représente un groupement alkényle en $C_2$ - $C_6$ et où x est égal à 1. De tels EVC sont par exemple décrits dans les brevets US-A-3 142 655, 3 821 140, 3 836 489 et 3 839 266.

Le constituant polyorganosiloxane de ces compositions EVC présente avantageusement une viscosité à 25°C au moins égale à 300 000 mPa.s et, de préférence, comprise entre 1 million et 30 millions de mPa.s et même davantage.

Le péroxyde organique **(a-1)** peut être n'importe lequel de ceux qui agissent comme agents vulcanisant envers les compositions formatrices d'élastomères de silicones. Il peut ainsi s'agir de l'un quelconque des péroxydes ou per esters qu'il est connu d'employer avec les élastomères de silicone, par exemple le peroxyde de ditertiobutyle, le péroxyde de benzoyle, le peracétate de tertiobutyle, le péroxyde de dicumyle, le 2,5-diperbenzoate de 2,5-diméthylhexane et le bis(t-butylpéroxy)-2,5 diméthyl-2,5 hexane, le péroxyde de monochlorobenzoyle, le péroxyde de 2-4 dichlorobenzoyle, le péroxyde de bis(2,4-dichlorobenzoyle), le peracétate de tertiobutyle, le 2,5-diméthyl-2,5-di(tert-butylpéroxy) hexane et le 2,2-bis (t-butylpéroxy)-p-diisopropylbenzene,.

De préférence, le péroxyde organique **(a-1)** est choisi parmi le groupe constitué par le 2,5-diméthyl-2,5-di(tert-butylpéroxy) hexane ou « Peroxyde L », le péroxyde de dicumyle ou « Péroxyde D », le péroxyde de bis(2,4-dichlorobenzoyle) ou « Péroxyde E », et leurs mélanges.

En général, lorsque le péroxyde organique **(a-1)** est présent dans la composition, on ajoute de 0,05 à 10 parties en poids pour 100 parties en poids d'au moins un polymère polyorganosiloxane **A** .

La composition selon l'invention peut aussi contenir comme charge semi-renforçante au moins une résine polyorganosiloxane (V) qui comporte de préférence au moins un reste alcényle dans sa structure. Ces résines polyorganosiloxane (V) sont des oligomères ou polymères organopolysiloxanes ramifiés bien connus et disponibles dans le commerce. Elles peuvent se présenter sous la forme de formulations ou de solutions, de préférence siloxaniques. Elles présentent, dans leur structure, au moins deux motifs différents choisis parmi ceux de formule $R_3SiO_{0,5}$ (motif M), $R_2SiO$ (motif D), $RSiO_{1,5}$ (motif T) et $SiO_2$ (motif Q), l'un au moins de ces motifs étant un motif T ou Q. Les radicaux R sont identiques ou différents et sont choisis parmi les radicaux alkyles linéaires ou ramifiés en C1 - C6, les radicaux alcényles en C2 - C4 phényle, trifluoro-3,3,3 propyle, et les groupements hydroxyles. On peut citer par exemple : comme radicaux R alkyles, les radicaux méthyle, éthyle, isopropyle, tertiobutyle et n-hexyle, et comme radicaux R alcényles, les radicaux vinyles. Selon un autre mode particulier, la résine polyorganosiloxane (V) comporte dans sa structure de 0,1 à 20 % en poids de groupe(s) alcényle(s), ladite structure présentant des motifs siloxyles de type M, identique ou différent, des motifs siloxyles de type(s) T, identiques ou différents, et/ou Q et éventuellement des motifs siloxyles de type D.

La composition selon l'invention peut aussi contenir au moins un additif de tenue thermique **J** tel que par exemple l'octoate de fer, l'octoate de cérium ou leurs mélanges.

Lors de la fabrication de câbles ou de fils électriques par extrusion, le choix du peroxyde dépendra en pratique du procédé employé pour durcir l'élastomère (procédé de vulcanisation). Quand le procédé de vulcanisation fonctionne en absence de pression (par exemple, four à air chaud et/ou rayonnement (infrarouge), le peroxyde utilisé est alors de préférence le peroxyde de monochlorobenzoyle et/ou le peroxyde de 2,4-dichlorobenzoyle. Quand le procédé de vulcanisation fonctionne en présence de pression (par exemple, tube vapeur), le peroxyde utilisé est alors de préférence le bis(t-butylpéroxy)-2,5 diméthyl-2,5 hexane.

Dans le cas des compositions **C** réticulant par des réactions de polyaddition appelées RTV, le polymère polyorganosiloxane **A** porteur de groupements alkényl-silylés présente avantageusement une viscosité à 25°C au plus égale à 10 000 mPa.s et, de préférence, comprise entre 200 et 5 000 mPa.s.

Dans le cas des compositions **C** réticulant par des réactions de polyaddition appelées LSR, le polymère polyorganosiloxane **A** porteur de groupements alkényl-silylés présente avantageusement une viscosité à 25°C supérieure à 1 000 mPa.s, se situant de préférence dans l'intervalle allant d'une valeur supérieure à 5 000 mPa.s à 200 000 mPa.s.

Dans le cas des compositions **C** réticulant par des réactions de polyaddition appelées EVC de polyaddition, le polymère polyorganosiloxanes **A** porteur de groupements alkényl-silylés présente avantageusement une viscosité à 25°C supérieure à 300 000 mPa.s et, de préférence comprise entre 1 million de mPa.s et 30 millions de mPa.s voir même davantage.

Dans les cas des compositions polyorganosiloxanes **C** appelées RTV, LSR ou EVC de polyaddition, le composant **(a-2)** sera avantageusement constitué :

a) d'au moins un polyorganosiloxane **(II)** présentant, par molécule, au moins deux atomes d'hydrogène liés au silicium, et de préférence au moins trois atomes d'hydrogène liés au silicium, et
b) une quantité efficace d'au moins un catalyseur de polyaddition **(III)** et de préférence choisi parmi le groupe constitué par du platine, un composé du platine, un complexe du platine et leurs mélanges.

Comme exemples de polyorganosiloxane **(II)** on peut citer ceux qui comprennent :

- des motifs siloxyles de formule **(II-1)**:

$$H_d L_e SiO \frac{4-(d+e)}{2}$$

**(II-1)**

dans laquelle :

- les groupes L, identiques ou différents, représentent chacun un groupe hydrocarboné monovalent ayant de 1 à 15 atomes de carbone, tels que par exemple un groupe alkyle ayant de 1 à 8 atomes de carbone inclus, éventuellement substitué par au moins un atome d'halogène, choisi avantageusement parmi les groupes méthyle, éthyle, propyle et 3,3,3-trifluoropropyle, ou un groupes aryle choisi avantageusement parmi un radical xylyle, tolyle ou phényle,
- d est un nombre entier égal à 1 ou 2, e est un nombre entier égal à 0, 1 ou 2, la somme d + e est égale à 1, 2 ou 3, et

- éventuellement des motifs siloxyles de formule **(II-2)** :

$$L_g SiO \frac{4-g}{2}$$

**(II-2)**

dans laquelle les groupements L ont la même signification que ci-dessus et g est égal à 0, 1, 2 ou 3.

La viscosité dynamique à 25°C de ce polyorganosiloxane **(II)** est de préférence au moins égale à 10 mPa.s et, de préférence elle est comprise entre 20 et 10000 mPa.s. Le polyorganosiloxane **(II)** peut être uniquement formé de motifs de formule **(II-1)** ou comporter en plus des motifs de formule **(II-2)**. Le polyorganosiloxane **(II)** peut présenter une structure linéaire ramifiée cyclique ou en réseau.

Des exemples de motifs siloxyles de formule **(II-1)** sont : $H(CH_3)_2SiO_{1/2}$, $HCH_3SiO_{2/2}$ et $H(C_6H_5)SiO_{2/2}$. Des exemples de motifs siloxyles de formule **(II-2)** sont: $(CH_3)_3SiO_{1/2}$, $(CH_3)_3SiO_{1/2}$ $(CH_3)_2SiO_{2/2}$ et $(CH_3)(C_6H_5)SiO_{2/2}$.

Des exemples utiles de polyorganosiloxane **(II)** sont des composés linéaires comme :

- les diméthylpolysiloxanes à extrémités hydrogénodiméthylsilyle,
- les copolymères à motifs (diméthyl)(hydrogénométhyl)polysiloxanes à extrémités triméthylsilyles,
- les copolymères à motifs (diméthyl)(hydrogénométhyl) polysiloxanes à extrémités hydrogénodiméthylsilyles, et
- les hydrogénométhylpolysiloxanes à extrémités triméthylsilyles,

Le polyorganosiloxane **(II)** peut éventuellement être un mélange d'un diméthylpolysiloxane à extrémités hydrogénodiméthylsilyle et d'un polyorganosiloxane porteur d'au moins 3 fonctions SiH (hydrogénosiloxyle).

Le rapport du nombre d'atomes d'hydrogène liés au silicium dans le polyorganosiloxane **(II)** sur le nombre total de groupes à insaturation alcényle du polymère polyorganosiloxanes **A** est généralement compris entre 0,4 et 10, de préférence entre 0,6 et 5.

Selon un mode de réalisation préféré, le polyorganosiloxane **(II)** est un polyorganohydrogénosiloxane présentant par molécule au moins 2 atomes d'hydrogène liés à des atomes de silicium différents et dont les radicaux organiques liés aux atomes de silicium sont choisis parmi le groupe constitué par les radicaux: méthyle, éthyle, phényle et leurs combinaisons.

Le catalyseur de polyaddition **(III)** est de préférence choisi parmi le groupe constitué par du platine, un composé du platine, un complexe du platine et leurs mélanges. Dans ce cas là, le catalyseur de polyaddition (III) sera aussi le stabilisant thermique D jouant ainsi un double rôle de catalyseur de polyaddtion et stabilisant thermique permettant d'améliorer la résistance contre la dégradation des élastomères silicones sous l'effet de températures supérieures à 800°C.

Le catalyseur de polyaddition **(III)** permettant d'améliorer la résistance contre la dégradation des élastomères silicones sous l'effet de températures supérieures à 800°C est choisi parmi le groupe constitué par: le platine métal, un composé du platine, un complexe du platine et leurs mélanges. Le platine peut être sous forme :

- de platine métallique (élémentaire),
- d'acide chloroplatinique (par exemple l'acide hexachloroplatinique $H_2PtCl_6$) ;
- de complexes du platine et de produits organiques comme notamment les complexes du platine et d'organosiloxanes vinylés (par exemple le complexe de Karstedt), les complexes tels que ceux de formule $(PtCl_2, \text{oléfine})_2$ et $H(PtCl_3, \text{oléfine})$ où l'oléfine représente l'éthylène, le propylène, le butylène, le cyclohexène ou le styrène, les complexes de chlorure de platine et de cyclopropane ou les complexes de type platine carbène (tels que ceux décrits par exemple dans la demande de brevet EP1235836-A2).

En plus des ingrédients obligatoires spécifiés ci-avant, les compositions selon la présente invention peuvent contenir éventuellement en outre un ou plusieurs additif(s) auxiliaire(s) f) tel(s) que notamment un pigment f5) pour fabriquer des fils et des câbles colorés.

Pour la préparation des compositions selon l'invention, les divers ingrédients sont intimement mélangés au moyen des dispositifs bien connus dans l'industrie des élastomères silicones, l'ordre d'incorporation pouvant être quelconque.

En outre l'invention, dans un second objet, porte sur l'utilisation de la composition C selon l'invention et telle que décrite ci-dessus pour la réalisation des enveloppes ou isolants primaires des mono conducteurs entrant dans la constitution des fils ou câbles électriques protégés contre l'incendie.

L'invention, dans un troisième objet, porte sur les fils ou câbles électriques qui sont fabriqués moyennant l'utilisation des compositions polyorganosiloxane selon le premier objet de l'invention.

Dans le cadre de pareille utilisation, le dépôt d'une composition C selon l'invention autour de chaque mono conducteur peut s'effectuer selon les procédés usuels, notamment par des procédés d'extrusion. Le dépôt ainsi obtenu est ensuite réticulé par chauffage pour conduire à la formation de l'isolant primaire en élastomère silicone. La durée du chauffage varie évidemment avec la température de la matière et la pression éventuelle de travail. Elle est généralement de l'ordre de quelques secondes à plusieurs minutes entre 100 et 120 °C et de quelques secondes entre 180 et 200 °C. Il est possible de déposer plusieurs couches conjointement à l'aide d'une extrusion en tandem équipée par exemple d'une tête d'équerre ou d'une co-extrusion.

Un autre objet de l'invention concerne un fil électrique ou un câble électrique protégé contre l'incendie comprenant au moins un élément conducteur (1) entouré par au moins une couche isolante primaire (2) caractérisé en ce que ladite couche isolante primaire (2) est constituée d'un matériau obtenu par durcissement de ladite composition C selon l'invention et telle que décrite ci-dessus éventuellement par un chauffage procurant une température matière allant de 80°C à 250°C.

Selon un mode de réalisation préféré, le matériau obtenu par durcissement de ladite composition C selon l'invention à une densité inférieure à 1,30.

Le fil ou câble électrique selon l'invention peut comprendre en outre une gaine extérieure entourant le ou les conducteurs électriques isolés. Cette gaine extérieure est bien connue de l'homme du métier. Elle peut brûler complètement localement et se transformer en cendres résiduelles sous l'effet des températures élevées d'un incendie sans pour autant être propagateur de l'incendie. Le matériau qui compose la gaine extérieure peut être par exemple une matrice polymère à base de polyoléfine et au moins une charge minérale ignifugeante hydratée choisie notamment parmi les hydroxydes métalliques tels que par exemple le dihydroxyde de magnésium ou le trihydroxyde d'aluminium. La gaine extérieure est classiquement obtenue par extrusion.

Selon un mode de réalisation préféré, le fil électrique ou câble électrique protégé contre l'incendie selon l'invention est caractérisé en ce que la couche isolante primaire (2) est formée par dépôt autour de l'élément conducteur (1) de ladite composition C par une technique d'extrusion et par des moyens de chauffage de manière à obtenir une température matière allant de 80°C à 250°C jusqu'au durcissement de ladite composition C.

Un autre objet de l'invention concerne un procédé de fabrication d'un fil ou câble électrique selon l'invention et tel que décrit ci-avant, caractérisé en ce qu'il comprend les étapes consistant à :

i. former autour d'un conducteur électrique au moins une couche isolante primaire (2) qui est constituée d'un matériau obtenu par durcissement de ladite composition C éventuellement par un chauffage procurant une température matière allant de 80°C à 250°C,

ii. optionnellement, assembler au moins deux conducteurs électriques isolés tels qu'obtenus à l'étape i, et

iii. optionnellement, extruder une gaine extérieure telle que définie ci-avant autour du ou des conducteurs électriques isolés de l'étape i ou ii.

Les exemples suivants sont donnés à titre illustratif et ils ne peuvent pas être considérés comme une limite de la portée de l'invention.

**EXEMPLES**

1) Constituants :

- Polyorganosiloxane **A1** = un polydiméthylsiloxane bloqué à chacune de ses deux extrémités par un motif diméthylvinylsiloxy, et ayant une viscosité de 20 millions de mPa.s à 25°C ;
- Polyorganosiloxane **A2** = un poly(diméthyl)(méthylvinyl)-siloxane bloqué à chacune de ses deux extrémités par un motif triméthylsiloxy, contenant dans la chaîne 720 ppm de groupes vinyles. ayant une viscosité de 20 millions de mPa.s à 25°C ;

- Mineral **B1** = mélange naturel d'Huntite et d'Hydromagnésite correspondant au grade commercial Ultracarb LH15 de MINELCO,
- Mineral **B2** = mélange naturel d'Huntite [(Mg$_3$Ca(CO$_3$)$_4$)] et d'Hydromagnésite [Mg$_5$(CO$_3$)$_4$(OH)$_2$.4H$_2$O)] correspondant au grade commercial Ultracarb® 1250 de MINELCO,
- Espèce minérale **I1** = Wollastonite
- Espèce minérale **I2** = Carbonate de magnésium, produit de la gamme Luvomag® (série C013, vendu par la société Lehmanns Voss & Co).
- Stabilisant **D1** : solution dans le divinyltétraméthyldisiloxane d'un complexe du platine à 10 % en poids de platine ligandé par du divinyltétraméthyldisiloxane (complexe de Karstedt) ;
- Composant de durcissement **E1** = péroxyde de 2,4-dichlorobenzoyle ;
- Charge réfractaire **G'1** : silice pyrogénée (surface spécifique 150 m$^2$/g)
- Charge réfractaire **G'2** : silice pyrogénée traitée en surface avec de l'octaméthyltétrasiloxane
- Charge réfractaire **G'3** = silice cristalline (Sikron® E600 commercialisé par la société SiBELCO) ;
- Charge réfractaire **G'4** = talc (MISTRON® HAR commercialisé par la société Imerys Talc) ;
- Charge réfractaire **G'5** = talc (MISTRON® R10 commercialisé par la société Imerys Talc) ;
- Charge réfractaire **G'6** = mica (Concord® grade 325) ;
- Charge réfractaire **G'7** = mica (Mica MAS 10®);
- Charge réfractaire **G'8** = MgO (Luvomag® N 050 commercialisé par la société Lehmann & Voss& Co.)
- Charge réfractaire **G'9** = Kaolin traité (Burgess® 2211 commercialisé par la société ® Burgess Pigment Co.) ;
- Charge réfractaire **G'10** = CaO (Caloxol® PG commercialisé par la société Omya UK Chemicals) ;
- Charge réfractaire **G'11** = TiO$_2$ (Aeroxide® TIO2 P 25 commercialisé par la société Evonik) ;
- MEMO : γ-méthacryloxypropyltriméthoxysilane
- Additif **1** = Rhodorsil® RP 110 ST (huile di(hydroxydiméthylsiloxy) polydiméthylsiloxane commercialisée par la société Bluestar Silicones France SAS) ;
- Additif **2** = RG 150 HTS (huile silicone phénylée commercialisée par la société Bluestar Silicones France SAS) ;
- Additif **3** = RP130 Vi (huile silicone vinylée et hydroxylée commercialisée par la société Bluestar Silicones France SAS),
- Additif **J1** = éthyl-2 hexanoate de fer.

2) Préparation des compositions :

Dans un pétrin malaxeur à bras en Z, on mélange pendant 1 heure à température ambiante (23°C) les constituants des compositions (sauf le composant de durcissement). Le mélange ainsi obtenu est alors travaillé sur un mélangeur à cylindres et on lui ajoute le composant de durcissement. Les compositions testées sont décrites dans le Tableau 1 ci-dessous.

C'est au niveau du mélangeur à cylindres que l'on évalue la facilité de mise en œuvre (ou « processabilité ») du mélange réalisé. Le mélange est évalué suivant l'échelle suivante :

0 = mélange très collant ne permettant pas de travailler sur cylindres;
1-2 = collant, le mélange est difficilement mis en œuvre sur cylindres;
3-4 = légèrement collant ;
5 = non collant, le mélange est facilement mis en œuvre sur cylindres.

Tableau 1 : Constituants des compositions

| Constituants | Compositions calculées en pourcentage massique par rapport à la somme des polyorganosiloxanes **A1** et **A2** | | | | | | |
|---|---|---|---|---|---|---|---|
| | **C-1** | **C-2** | **C-3** | **I-1** | **I-2** | **I-3** | **I-4** |
| Polyorganosiloxane **A2** | 98,54 | 33,87 | 100 | 25,73 | 25,73 | 100 | 100 |
| Polyorganosiloxane **A1** | 1,46 | 66,13 | | 74,27 | 74,27 | | |
| Mineral **B1** | | | | 4,50 | 4,50 | 22.33 | 11.17 |
| Mineral **B2** | | | | | | | 11.17 |
| Espèce minérale **I1** | | 3,33 | | | | | |

(suite)

| Constituants | Compositions calculées en pourcentage massique par rapport à la somme des polyorganosiloxanes A1 et A2 | | | | | | |
|---|---|---|---|---|---|---|---|
| | C-1 | C-2 | C-3 | I-1 | I-2 | I-3 | I-4 |
| Stabilisant thermique **D1** (quantité de platine en ppm par rapport au poids total de la composition) | 12 ppm | 20 ppm | 20ppm | 5 ppm | 5 ppm | 20 ppm | 20ppm |
| Charge réfractaire **G'1** | 13,65 | 12,56 | | 42,76 | 42,76 | | |
| Charge réfractaire **G'2** | | 18,38 | 24 | | | 24 | 24 |
| Charge réfractaire **G'3** | | 33,30 | 96 | | | 96 | 96 |
| Charge réfractaire **G'4** | | | | | 12,01 | | |
| Charge réfractaire **G'5** | | | | 12,02 | 6,00 | | |
| Charge réfractaire **G'6** | 7,71 | | | | | | |
| Charge réfractaire **G'7** | 0,80 | 1,78 | | | | | |
| Charge réfractaire **G'8** | | | | 3,01 | 3,00 | | |
| Charge réfractaire **G'9** | | 26,64 | | | | | |
| Charge réfractaire **G'10** | | 0,29 | | | | | |
| Charge réfractaire **G'11** | 1,68 | 2,01 | | | | | |
| MEMO | 0,69 | | 0.4 | 0,46 | 0,46 | 0.4 | 0.4 |
| Oxyde de zinc **H1** | 4,40 | 4,93 | | 4,50 | 4,50 | | |
| Hydroxyde de cérium | 0,87 | 1,95 | | | | | |
| Additif **J1** | 0,63 | 0,39 | 0.4 | | | 0.4 | 0.4 |
| Additif **1** | 4,36 | 2,90 | 1.0 | 3,93 | 3,93 | 1 | 1 |
| Additif **2** | | | | 3,02 | 3,02 | | |
| Additif **3** RP130 Vi | | 1,94 | | | | | |
| Composant de durcissement **E1** | 1,48 | 2,00 | 1.5 | 2,62 | 2,62 | 1,50 | 1,50 |

3) Caractérisation des compositions :

(1i) Une fraction de la masse homogène obtenue sur le malaxeur est utilisée pour mesurer les propriétés mécaniques de l'élastomère silicone résultant de la vulcanisation à chaud de la composition polyorganosiloxane. Pour ce faire, la fraction de masse homogène retenue à cet effet est alors vulcanisée, sous pression, pendant 8 minutes à 115°C, en opérant dans un moule approprié permettant d'obtenir des plaques de 2 mm d'épaisseur. On obtient ainsi des plaques à l'état non recuit (NR). On soumet ensuite une fraction des plaques à un recuit de 4h à 200°C (R) puis à un vieillissement de 10 jours à 200°C. On prélève ensuite dans l'ensemble de ces plaques des échantillons normalisés et on mesure les propriétés suivantes :

- dureté Shore A (DSA) selon la norme DIN 53505,
- résistance à la rupture (RR) en MPa selon la norme AFNOR NF T 46002,
- allongement à la rupture (AR) en % selon la norme précédente,
- module élastique (Mod 100%) à 100 % d'allongement en MPa selon la norme précédente.

On mesure encore la densité de l'élastomère silicone à l'état non recuit (NR) en opérant selon les indications de la norme AFNOR NF T 46030.

(2i) Une autre fraction de la masse homogène obtenue sur le malaxeur est découpée sous forme de bandes qui vont alimenter l'extrudeuse destinée à la mise en oeuvre d'un câble électrique. La fabrication du câble est une construction standard consistant à réaliser un câble de 2,8 mm de diamètre comprenant un monoconducteur en cuivre de 1,05 mm de diamètre, autour duquel est extrudé une enveloppe ou isolant primaire en élastomère silicone ayant une épaisseur de 0,875 mm. Le câble ainsi obtenu à la sortie de l'extrudeuse est vulcanisé dans un four infra-rouge à air chaud soumis à une température de l'ordre de 250°C (procurant une température matière de l'ordre de 110°C - 130°C) pendant 1 à 3 minutes. On prélève ensuite sur le câble des échantillons normalisés pour mesurer la cohésion des cendres sous une tension électrique de 500 volts selon la norme NF C 32-070 CR1. Les résultats obtenus sont reportés sur le Tableau 2 ci-dessous. La mention du terme « NC » signifie que le test n'a pas été concluant et qu'il est qualifié de « non classé » (NC).

Tableau 2 : propriétés mécaniques et de cohésion des cendres.

| | Composition C-1 | Composition C-2 | Composition I-1 | Composition I-2 |
|---|---|---|---|---|
| Densité de l'élastomère silicone à l'état non recuit (NR) | 1,23 | 1,42 | 1,26 | 1,28 |
| **Propriétés mécaniques de l'élastomère silicone à l'état non recuit (NR)** | | | | |
| DSA (pt) | 75 | 62 | 71 | 71 |
| RR (MPa) | 8 | 6,8 | 8,5 | 8,1 |
| AR (%) | 240 | 406 | 331 | 324 |
| Mod 100% | | | 3,4 | 3,7 |
| Facilité de mise en œuvre (ou « processabilité ») | 4 | 4 | 5 | 5 |
| **Propriétés mécaniques après vieillissement thermique 10j à 200°C** | | | | |
| DSA (pt) | 79 | 70 | 84 | 85 |
| RR (MPa) | 7.2 | 6.7 | 6,1 | 6,0 |
| AR (%) | 140 | 143 | 190 | 172 |
| | | | | |
| **Cohésion des cendres sous 500V selon la norme NFC 32070 CR1** | | | | |
| Temps en minutes | NC | 70 | >90 | >90 |

(3i) Les tests de résistance à la flamme des élastomères obtenus sont réalisés selon la norme internationale IEC 60707 défini par the Underwriters Laboratories. Plus précisément, le protocole utilisé pour évaluer les compositions présentées dans le Tableau n°1 correspond à la norme UL 94V qui consiste à exposer verticalement à la flamme une éprouvette d'élastomère vulcanisé de 127mm de longueur, 12,7 mm de largeur et d'épaisseur précisée dans les essais ci-après. Ainsi, cette éprouvette subit deux expositions successives, de 10 secondes chacune, à une flamme de 900°C environ calibrée selon les exigences de la norme pré-citée. Pour chaque exposition sont notés les durées d'extinctions T1 puis T2.

Un classement est ainsi effectué :

- le classement « V0 » est le meilleur, classement qui correspond à un matériau difficilement inflammable, ne produisant pas de gouttes enflammées lors du test.
- Pour le classement « V1 », le matériau est plus facilement inflammable mais ne produit pas de gouttes enflammées lors du test.
- Pour le classement « V2 », en plus de l'inflammabilité plus facile que pour V0, des gouttes enflammées peuvent se produire lors du test.
- Pour des matériaux encore plus inflammables, on donne la valeur « NC » (non classé).

Les résultats obtenus sont reportés sur le Tableau 3 ci-dessous.

Tableau 3.

| | Composition C-3 | Composition I-3 | Composition I-4 |
|---|---|---|---|
| **Les tests de résistance à la flamme (UL94V)** | | | |
| Classement Epaisseur de l'éprouvette = 3 mm ; élastomère recuit | NC | V0 | V0 |

(suite)

|  | Composition C-3 | Composition I-3 | Composition I-4 |
|---|---|---|---|
| Les tests de résistance à la flamme (UL94V) | | | |
| Classement Epaisseur de l'éprouvette = 2 mm ; élastomère recuit | NC | V0 | V0-V1 |
| Classement Epaisseur de l'éprouvette = 2 mm ; élastomère non recuit | NC | V1 | V1 |

Les compositions selon l'invention présentent de meilleures performances d'autoextinguibilité ou de résistance à la flamme lorsqu'elles sont durcies en élastomères.

Il est à noter qu'une composition comparative a été testée avec une espèce minérale I2 = Carbonate de magnésium, produit de la gamme Luvomag® (série C013, vendu par la société Lehmanns Voss & Co) mais que les résultats n'ont pas donné satisfaction et ont été qualifiés de « non classé » (NC).

**Revendications**

1.  - Composition C comprenant :

(A) pour 100 parties en poids d'au moins un polymère polyorganosiloxane **A** présentant par molécule au moins deux groupes alcényles, en liés au silicium,
(B) entre 1 et 30 parties en poids d'au moins un minéral **B** qui est constitué par un mélange d'hydromagnésite de formule brute $Mg_5(CO_3)_4(OH)_2.4H_2O$ et d'huntite de formule brute $Mg_3Ca(CO_3)_4$,
(C) de 0,1 ppm à 200 ppm, exprimée en poids de platine métal élémentaire par rapport au poids total de la composition **C,** d'au moins un stabilisant thermique **D** permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges, et
(D) un composant de durcissement **E** en quantité suffisante pour durcir la composition.

2.  - Composition C selon la revendication 1 comprenant :

(A) pour 100 parties en poids d'au moins un polymère polyorganosiloxane **A** présentant par molécule au moins deux groupes alcényles, en liés au silicium,
(B) entre 1 et 30 parties en poids d'au moins un minéral **B** qui est constitué par un mélange d'hydromagnésite de formule brute $Mg_5(CO_3)_4(OH)_2.4H_2O$ et d'huntite de formule brute $Mg_3Ca(CO_3)_4$,
(C) de 0,1 ppm à 200 ppm, exprimé en poids de platine métal élémentaire par rapport au poids total de la composition **C,** d'au moins un stabilisant thermique **D** permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges,
(D) un composant de durcissement **E** en quantité suffisante pour durcir la composition,
(E) de 0 à 200 parties en poids, de préférence de 0,5 à 120 parties en poids et encore plus préférentiellement de 0,5 à 50 parties en poids d'au moins une charge fusible **F** ayant un un point de de ramollissement compris entre 300°C et 900°C,
(F) de 0 à 250 parties en poids et de préférence de 0,1 à 100 parties poids et encore plus préférentiellement de 0,5 à 50 parties en poids d'au moins une charge minérale réfractaire **G,**
(G) de 0 à 300 parties en poids, de préférence de 1 à 100 parties en poids et encore plus préférentiellement de 1 à 80 parties en poids d'au moins une charge minérale ignifugeante **H** choisie parmi le groupe constitué par : l'hydroxyde de magnésium $Mg(OH)_2$, l'hydroxyde d'aluminium $Al(OH)_3$ qui a éventuellement été traitée en surface, par un organoakoxysilane ou un organosilazane, et leurs mélanges, et
(H) de 0 à 20 parties en poids, de préférence de 0,1 à 15 parties en poids et encore plus préférentiellement de 0,5 à 10 parties en poids d'un oxyde de zinc.

3.  - Composition C selon l'une quelconque des revendications précédentes **caractérisée en ce que** le composant de durcissement **E** est :

- au moins un peroxyde organique **(a-1),** ou
- un composant **(a-2)** constitué :

a) d'au moins un polyorganosiloxane **(II)** présentant, par molécule, au moins deux atomes d'hydrogène liés au silicium, et de préférence au moins trois atomes d'hydrogène liés au silicium, et
b) une quantité efficace d'au moins un catalyseur de polyaddition **(III)** et de préférence choisi parmi le groupe constitué par du platine, un composé du platine, un complexe du platine et leurs mélanges.

4. - Composition **C** selon l'une quelconque des revendications 1 ou 2 **caractérisée en ce qu'**elle comprend de 0,00001 à 0,0009 partie, soit de 0,1 ppm à 9 ppm, exprimée en poids de platine métal élémentaire par rapport au poids total de la composition C et d'au moins un stabilisant thermique **D** permettant d'améliorer la résistance contre la dégradation des élastomères silicones sous l'effet de températures supérieures à 800°C et qui est choisi parmi le groupe constitué par: le platine métal, un composé du platine, un complexe du platine et leurs mélanges.

5. - Composition **C** selon la revendication 2 dans laquelle la charge fusible **F** est choisie parmi le groupe constitué par : l'oxyde de bore, les borates de zinc, les phosphates de bore, les verres broyés, les verres sous forme de billes, les borates de calcium et leurs mélanges.

6. - Composition **C** selon la revendication 2 dans laquelle la charge minérale réfractaire **G** est choisie parmi le groupe constitué par: les oxydes de magnésium, les oxydes de calcium, la silice, le quartz, les montmorillonites, les talcs, les kaolins, les micas et leurs mélanges.

7. - Composition **C** selon la revendication 1 dans laquelle le polymère polyorganosiloxane **A** présente par molécule au moins 2 groupes vinyles liés à des atomes de silicium différents, situés dans la chaîne, en bouts de chaîne ou dans la chaîne et en bouts de chaîne, et dont les autres radicaux organiques liés aux atomes de silicium sont choisis parmi le groupe constitué par les radicaux: méthyle, éthyle et phényle.

8. - Composition **C** selon la revendication 3 dans laquelle le polyorganosiloxane **(II)** est un polyorganohydrogénosiloxane présentant par molécule au moins 2 atomes d'hydrogène liés à des atomes de silicium différents et dont les radicaux organiques liés aux atomes de silicium sont choisis parmi le groupe constitué par les radicaux: méthyle, éthyle, phényle et leurs combinaisons.

9. - Utilisation de la composition **C** telle que décrite selon l'une quelconque des revendications précédentes pour la réalisation des enveloppes ou isolants primaires des mono conducteurs entrant dans la constitution des fils ou câbles électriques protégés contre l'incendie.

10. - Fil électrique ou câble électrique protégé contre l'incendie comprenant au moins un élément conducteur **(1)** entouré par au moins une couche isolante primaire **(2) caractérisé en ce que** ladite couche isolante primaire **(2)** est constituée d'un matériau obtenu par durcissement de ladite composition C telle que définie selon l'une quelconque des revendications 1 à 8 éventuellement par un chauffage procurant une température matière allant de 80°C à 250°C.

11. - Fil électrique ou câble électrique protégé contre l'incendie selon la revendication 10 **caractérisé en ce que** la couche isolante primaire **(2)** est formée par dépôt autour de l'élément conducteur **(1)** de ladite composition **C** par une technique d'extrusion et par des moyens de chauffage de manière à obtenir une température matière allant de 80°C à 250°C jusqu'au durcissement de ladite composition **C.**

12. - Procédé de fabrication d'un fil ou câble électrique tel que décrit selon la revendication 10 ou 11, **caractérisé en ce qu'**il comprend les étapes consistant à :

i. former autour d'un conducteur électrique au moins une couche isolante primaire **(2)** qui est constituée d'un matériau obtenu par durcissement de ladite composition **C** telle que définie selon l'une quelconque des revendications 1 à 8 éventuellement par un chauffage procurant une température matière allant de 80°C à 250°C,
ii. optionnellement, assembler au moins deux conducteurs électriques isolés tels qu'obtenus à l'étape i, et
iii. optionnellement, extruder une gaine extérieure entourant le ou les conducteurs électriques isolés autour du ou des conducteurs électriques isolés de l'étape i ou ii.

**Patentansprüche**

1. Zusammensetzung C, umfassend:

(A) auf 100 Gewichtsteile an mindestens einem Polyorganosiloxan-Polymer A, das pro Molekül mindestens zwei $C_2$-$C_6$-Alkenylgruppen umfasst, welche an das Silicium gebunden sind,
(B) zwischen 1 und 30 Gewichtsteile an mindestens einem Mineral B, das aus einer Mischung von Hydromagnesit mit der Summenformel $Mg_5(CO_3)_4(OH)_2.4H_2O$ und Huntit mit der Summenformel $Mg_3Ca(CO_3)_4$ besteht,
(C) 0,1 ppm bis 200 ppm, ausgedrückt in Gewicht an elementarem Platinmetall unter Bezugnahme auf das Gesamtgewicht der Zusammensetzung C, an mindestens einem Hitzestabilisator D, der es ermöglicht, die Beständigkeit von Silikonelastomeren gegen einen Abbau unter Einwirkung von Temperaturen von mehr als 800 °C zu verbessern, wobei er aus der Gruppe ausgewählt ist, die aus den folgenden besteht: Platinmetall, einer Platinverbindung, einem Platinkomplex und deren Mischungen, und
(D) einen härtenden Bestandteil E in einer Menge, die ausreicht, um die Zusammensetzung zu härten.

2. Zusammensetzung C nach Anspruch 1, umfassend:

(A) auf 100 Gewichtsteile an mindestens einem Polyorganosiloxan-Polymer A, das pro Molekül mindestens zwei $C_2$-$C_6$-Alkenylgruppen umfasst, welche an das Silicium gebunden sind,
(B) zwischen 1 und 30 Gewichtsteile an mindestens einem Mineral B, das aus einer Mischung von Hydromagnesit mit der Summenformel $Mg_5(CO_3)_4(OH)_2.4H_2O$ und Huntit mit der Summenformel $Mg_3Ca(CO_3)_4$ besteht,
(C) 0,1 ppm bis 200 ppm, ausgedrückt in Gewicht an elementarem Platinmetall unter Bezugnahme auf das Gesamtgewicht der Zusammensetzung C, an mindestens einem Hitzestabilisator D, der es ermöglicht, die Beständigkeit von Silikonelastomeren gegen einen Abbau unter Einwirkung von Temperaturen von mehr als 800 °C zu verbessern, wobei er aus der Gruppe ausgewählt ist, die aus den folgenden besteht: Platinmetall, einer Platinverbindung, einem Platinkomplex und deren Mischungen,
(D) einen härtenden Bestandteil E in einer Menge, die ausreicht, um die Zusammensetzung zu härten,
(E) 0 bis 200 Gewichtsteile, vorzugsweise 0,5 bis 120 Gewichtsteile, und noch stärker bevorzugt 0,5 bis 50 Gewichtsteile an mindestens einem schmelzfähigen Füllstoff F, der einen Erweichungspunkt hat, welcher im Bereich von 300 °C und 900 °C liegt,
(F) 0 bis 250 Gewichtsteile und vorzugsweise 0,1 bis 100 Gewichtsteile und noch stärker bevorzugt 0,5 bis 50 Gewichtsteile an mindestens einem hitzebeständigen Füllstoff G,
(G) 0 bis 300 Gewichtsteile, vorzugsweise 1 bis 100 Gewichtsteile und noch stärker bevorzugt 1 bis 80 Gewichtsteile an mindestens einem flammhemmenden mineralischen Füllstoff H, welcher aus der Gruppe ausgewählt ist, die aus den folgenden besteht: Magnesiumhydroxid $Mg(OH)_2$, Aluminiumhydroxid $Al(OH)_3$, welches gegebenenfalls eine Oberflächenbehandlung mit einem Organoalkoxysilan oder einem Organosilazan erfahren hat, und deren Mischungen, und
(H) 0 bis 20 Gewichtsteile, vorzugsweise 0,1 bis 15 Gewichtsteile und noch stärker bevorzugt 0,5 bis 10 Gewichtsteile an einem Zinkoxid.

3. Zusammensetzung C nach einem beliebigen der vorherigen Ansprüche, **dadurch gekennzeichnet, dass** es sich bei dem härtenden Bestandteil E um Folgendes handelt:

- mindestens ein organisches Peroxid (a-1), oder
- einen Bestandteil (a-2), der aus Folgendem besteht:

a) mindestens einem Polyorganosiloxan (II), das pro Molekül mindestens zwei Wasserstoffatome, welche an das Silicium gebunden sind, und vorzugsweise mindestens drei Wasserstoffatome aufweist, welche an das Silicium gebunden sind, und
b) einer wirksamen Menge an mindestens einem Polyadditionskatalysator (III), wobei dieser vorzugsweise aus der Gruppe ausgewählt ist, welche aus Platin, einer Platinverbindung, einem Platinkomplex und deren Mischungen besteht.

4. Zusammensetzung (C) nach einem beliebigen der Ansprüche 1 oder 2, **dadurch gekennzeichnet, dass** sie 0,00001 bis 0,0009 Teile, entsprechend 0,1 ppm bis 9 ppm, ausgedrückt in Gewicht an elementarem Platinmetall unter Bezugnahme auf das Gesamtgewicht der Zusammensetzung C, und an mindestens einem Hitzestabilisator D umfasst, der es ermöglicht, die Beständigkeit von Silikonelastomeren gegen einen Abbau unter Einwirkung von Temperaturen von mehr als 800 °C zu verbessern, wobei er aus der Gruppe ausgewählt ist, die aus den folgenden besteht: Platinmetall, einer Platinverbindung, einem Platinkomplex und deren Mischungen.

5. Zusammensetzung C nach Anspruch 2, wobei der schmelzfähige Füllstoff F aus der Gruppe ausgewählt ist, welche aus den folgenden besteht: Boroxid, Zinkboraten, Borphosphaten, Glasmehl, Glas in Form von Kügelchen, Calciumboraten und deren Mischungen.

6. Zusammensetzung C nach Anspruch 2, wobei der hitzebeständige mineralische Füllstoff G aus der Gruppe ausgewählt ist, die aus den folgenden besteht: Magnesiumoxiden, Calciumoxiden, Siliciumdioxid, Quarz, Montmorilloniten, Talk-Sorten, Kaolinen, Glimmer-Sorten und deren Mischungen.

7. Zusammensetzung C nach Anspruch 1, wobei das Polyorganosiloxan-Polymer A pro Molekül mindestens 2 Vinylgruppen aufweist, die an unterschiedliche Siliciumatome gebunden sind, welche innerhalb der Kette, am Kettenende oder innerhalb der Kette und am Kettenende gelegen sind, wobei deren organische Reste, welche an die Siliciumatome gebunden sind, aus der Gruppe ausgewählt sind, welche aus den folgenden Resten besteht: Methyl, Ethyl und Phenyl.

8. Zusammensetzung C nach Anspruch 3, wobei es sich bei dem Polyorganosiloxan (II) um ein Polyorganohydrogensiloxan handelt, das pro Molekül mindestens 2 Wasserstoffatome aufweist, welche an unterschiedliche Siliciumatome gebunden sind, wobei dessen organische Reste, die an Siliciumatome gebunden sind, aus der Gruppe ausgewählt sind, welche aus den folgenden Resten besteht: Methyl, Ethyl, Phenyl und deren Kombinationen.

9. Verwendung der Zusammensetzung C gemäß der Beschreibung in einem beliebigen der vorhergehenden Ansprüche, um Hüllen oder primäre Isolatoren von Einleitern herzustellen, die Bestandteil von brandgeschützten elektrischen Leitungen oder Kabeln sind.

10. Elektrische Leitung oder elektrisches Kabel brandgeschützter Art, die/das mindestens ein Leiterelement (1) umfasst, welches von mindestens einer primären Isolierschicht (2) umhüllt ist, **dadurch gekennzeichnet, dass** die primäre Isolierschicht (2) aus einem Material besteht, das hergestellt wird, indem die Zusammensetzung C gemäß der Begriffsbestimmung in einem beliebigen der Ansprüche 1 bis 8 gegebenenfalls durch einen Heizvorgang gehärtet wird, der bewirkt, dass das Material eine Temperatur im Bereich von 80 °C bis 250 °C erreicht.

11. Elektrische Leitung oder elektrisches Kabel brandgeschützer Art nach Anspruch 10, **dadurch gekennzeichnet, dass** die primäre Isolierschicht (2) dadurch gebildet ist, dass rundum das Leiterelement (1) die Zusammensetzung C durch eine Extrusionstechnik aufgebracht wird und dass durch Heizmittel bewirkt wird, dass das Material solange eine Temperatur im Bereich von 80 °C bis 250 °C erreicht, bis die Zusammensetzung C gehärtet ist.

12. Verfahren zur Herstellung einer elektrischen Leitung oder eines solchen Kabels gemäß der Beschreibung in Anspruch 10 oder 11, **dadurch gekennzeichnet, dass** es die folgenden Schritte umfasst:

i. Bilden, rundum einen elektrischen Leiter, mindestens einer primären Isolierschicht (2), die aus einem Material besteht, das erhalten wurde, indem die Zusammensetzung C gemäß der Begriffsbestimmung in einem beliebigen der Ansprüche 1 bis 8 gegebenenfalls durch einen Heizvorgang gehärtet wird, der bewirkt, dass das Material eine Temperatur im Bereich von 80 °C bis 250 °C erreicht,
ii. gegebenenfalls, Zusammenfügen von mindestens zwei isolierten elektrischen Leitern, wie sie im Schritt i erhalten wurden, und
iii. gegebenenfalls, Extrudieren einer äußeren Ummantelung, welche den oder die isolierten elektrischen Leiter umhüllt, rundum den oder die isolierten elektrischen Leiter des Schrittes i oder ii.

## Claims

1. Composition C comprising:

(A) per 100 parts by weight of at least one polyorganosiloxane polymer A having per molecule at least two silicon-bonded alkenyl groups,
(B) between 1 and 30 parts by weight of at least one mineral B that consists of a mixture of hydromagnesite of

empirical formula $Mg_5(CO_3)_4(OH)_2 \cdot 4H_2O$ and huntite of empirical formula $Mg_3Ca(CO_3)_4$,
(C) from 0.1 ppm to 200 ppm, expressed as weight of elemental platinum metal relative to the total weight of composition C, of at least one thermal stabilizer D for improving the resistance to degradation of silicone elastomers under the influence of temperatures greater than 800°C and that is selected from the group consisting of: platinum metal, a platinum compound, a platinum complex and mixtures thereof, and
(D) a curing component E in an amount sufficient to cure the composition.

2.  Composition C according to Claim 1 comprising:

(A) per 100 parts by weight of at least one polyorganosiloxane polymer A having per molecule at least two silicon-bonded alkenyl groups,
(B) between 1 and 30 parts by weight of at least one mineral B that consists of a mixture of hydromagnesite of empirical formula $Mg_5(CO_3)_4(OH)_2 \cdot 4H_2O$ and huntite of empirical formula $Mg_3Ca(CO_3)_4$,
(C) from 0.1 ppm to 200 ppm, expressed as weight of elemental platinum metal relative to the total weight of composition C, of at least one thermal stabilizer D for improving the resistance to degradation of silicone elastomers under the influence of temperatures greater than 800°C and that is selected from the group consisting of: platinum metal, a platinum compound, a platinum complex and mixtures thereof,
(D) a curing component E in an amount sufficient to cure the composition,
(E) from 0 to 200 parts by weight, preferably from 0.5 to 120 parts by weight and even more preferably from 0.5 to 50 parts by weight, of at least one fusible filler F having a softening point of between 300°C and 900°C,
(F) from 0 to 250 parts by weight and preferably from 0.1 to 100 parts by weight and even more preferably from 0.5 to 50 parts by weight of at least one refractory mineral filler G,
(G) from 0 to 300 parts by weight, preferably from 1 to 100 parts by weight and even more preferably from 1 to 80 parts by weight, of at least one flame-retardant mineral filler H selected from the group consisting of: magnesium hydroxide $Mg(OH)_2$, aluminium hydroxide $Al(OH)_3$ that has optionally been surface-treated with an organoalkoxysilane or organosilazane, and mixtures thereof, and
(H) from 0 to 20 parts by weight, preferably from 0.1 to 15 parts by weight and even more preferably from 0.5 to 10 parts by weight, of zinc oxide.

3.  Composition C according to either one of the preceding claims, **characterized in that** curing component E is:

- at least one organic peroxide (a-1), or
- a component (a-2) consisting of:

a) at least one polyorganosiloxane (II) having, per molecule, at least two silicon-bonded hydrogen atoms, and preferably at least three silicon-bonded hydrogen atoms, and
b) an effective amount of at least one polyaddition catalyst (III), preferably selected from the group consisting of platinum, a platinum compound, a platinum complex and mixtures thereof.

4.  Composition C according to either one of Claims 1 and 2, **characterized in that** it comprises from 0.00001 to 0.0009 parts, i.e. from 0.1 ppm to 9 ppm, expressed as weight of elemental platinum metal relative to the total weight of composition C, and of at least one thermal stabilizer D for improving the resistance to degradation of silicone elastomers under the influence of temperatures greater than 800°C and that is selected from the group consisting of: platinum metal, a platinum compound, a platinum complex and mixtures thereof.

5.  Composition C according to Claim 2, wherein the fusible filler F is selected from the group consisting of: boron oxide, zinc borates, boron phosphates, ground glasses, glasses in bead form, calcium borates and mixtures thereof.

6.  Composition C according to Claim 2, wherein the refractory mineral filler G is selected from the group consisting of: magnesium oxides, calcium oxides, silica, quartz, montmorillonites, talcs, kaolins, micas and mixtures thereof.

7.  Composition C according to Claim 1, wherein the polyorganosiloxane polymer A has per molecule at least 2 vinyl groups bonded to different silicon atoms located within the chain, at chain ends or within the chain and at chain ends, and in which the other organic radicals bonded to the silicon atoms are selected from the group consisting of the radicals: methyl, ethyl and phenyl.

8.  Composition C according to Claim 3, wherein the polyorganosiloxane (II) is a polyorganohydrogenosiloxane having per molecule at least 2 hydrogen atoms bonded to different silicon atoms and in which the organic radicals bonded to the silicon atoms are selected from the group consisting of the radicals: methyl, ethyl, phenyl and combinations thereof.

9. Use of composition C as described in any one of the preceding claims for producing coverings or primary insulation of single-core wiring or cabling within the structure of fire-protected electric wires or cables.

10. Fire-protected electric wire or electric cable comprising at least one conducting element (1) surrounded by at least one primary insulating layer (2), **characterized in that** said primary insulating layer (2) consists of a material obtained by curing said composition C as defined in any one of Claims 1 to 8, optionally by heating providing a material temperature in the range from 80°C to 250°C.

11. Fire-protected electric wire or electric cable according to Claim 10, **characterized in that** the primary insulating layer (2) is formed by depositing said composition C around the conducting element (1) by an extrusion technique and by heating so as to obtain a material temperature in the range from 80°C to 250°C until said composition C has cured.

12. Process for producing an electric wire or cable as described in Claim 10 or 11, **characterized in that** it comprises the steps of:

i. forming around an electrical conductor at least one primary insulating layer (2) that consists of a material obtained by curing said composition C as defined in any one of Claims 1 to 8, optionally by heating providing a material temperature in the range from 80°C to 250°C,
ii. optionally, joining together at least two insulated electrical conductors as obtained in step i, and
iii. optionally, extruding an outer sheath surrounding the insulated electrical conductor(s) around the insulated electrical conductor(s) from step i or ii.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0467800 A
- WO 0134696 A
- WO 0134705 A
- WO 2004064081 A
- US 20100105823 A1
- EP 1238007 A
- EP 2004741 A
- EP 2099848 A
- US 2823218 A
- US 3775452 A
- US 3159601 A
- US 3159662 A
- EP 1866364 A1
- EP 1235836 A2
- US 3142655 A
- US 3821140 A
- US 3836489 A
- US 3839266 A